(19) Europäisches Patentamt
European Patent Office
Office européen des brevets

(11) EP 2 022 945 A1

(12) EUROPÄISCHE PATENTANMELDUNG

(43) Veröffentlichungstag:
11.02.2009 Patentblatt 2009/07

(51) Int Cl.:
F01D 13/00 (2006.01)      F01D 19/00 (2006.01)
F01D 17/02 (2006.01)      F01K 23/10 (2006.01)

(21) Anmeldenummer: 07015828.2

(22) Anmeldetag: 10.08.2007

(84) Benannte Vertragsstaaten:
AT BE BG CH CY CZ DE DK EE ES FI FR GB GR
HU IE IS IT LI LT LU LV MC MT NL PL PT RO SE
SI SK TR
Benannte Erstreckungsstaaten:
AL BA HR MK RS

(71) Anmelder: Siemens Aktiengesellschaft
80333 München (DE)

(72) Erfinder:
• Brummel, Gerd-Hans, Dr.
  13465 Berlin (DE)
• Emberger, Holger-Max
  9470 Buchs (CH)
• Frank, Gregor
  45127 Essen (DE)
• Fränkle, Matthias
  91094 Bräuningshof (DE)
• Linnert, Uwe, Dr.
  90766 Fürth (DE)

(54) **Verfahren zum Betreiben einer Kraftwerksturbinenanlage sowie Regelungseinrichtung für eine Kraftwerkstrubinenanlage**

(57) Ein Verfahren zum Betreiben einer Kraftwerksturbinenanlage (2) mit mindestens zwei hintereinander auf einem gemeinsamen Wellenstrang (4) angeordneten, einen Generator (8) antreibenden Turbinen (6, 10), bei dem mittels zugeordneter Drehmomentsensoren das von der jeweiligen Turbine (6, 10) an den Wellenstrang (4) abgegebene Drehmoment ($M_{GT}$, $M_{DT}$) ermittelt und in einen individuellen Leistungsbeitrag ($P_{GT}$, $P_{DT}$) der jeweiligen Turbine (6, 10) umgerechnet wird, soll für eine Beherrschung von dynamischen Betriebszuständen ertüchtigt werden und dabei insbesondere besonders kurze Anfahrzeiten bei zugleich hoher betrieblicher Sicherheit ermöglichen. Zu diesem Zweck ist erfindungsgemäß vorgesehen, dass während eines Lastwechselvorgangs, insbesondere beim Anfahren der Kraftwerksturbinenanlage (2), aus dem zeitlichen Verlauf der individuellen Leistungsbeiträge ($P_{GT}$, $P_{DT}$) individuelle zeitliche Lastgradienten ($\dot{P}_{GT}$, $\dot{P}_{DT}$) für die einzelnen Turbinen (6, 10) ermittelt und als Eingangsgrößen für eine individuelle Leistungsregelung der einzelnen Turbinen (6, 10) zugrunde gelegt werden.

FIG 1

EP 2 022 945 A1

**Beschreibung**

Die Erfindung betrifft ein Verfahren zum Betreiben einer Kraftwerksturbinenanlage mit mindestens zwei hintereinander auf einem gemeinsamen Wellenstrang angeordneten, einen Generator antreibenden Turbinen, bei dem mittels zugeordneter Drehmomentsensoren das von der jeweiligen Turbine an den Wellenstrang abgegebene Drehmoment ermittelt und in einen individuellen Leistungsbeitrag der jeweiligen Turbine umgerechnet wird. Die Erfindung betrifft weiterhin eine Regelungseinrichtung für eine Kraftwerksturbinenanlage mit mindestens zwei hintereinander auf einem gemeinsamen Wellenstrang angeordneten, einen Generator antreibenden Turbinen, wobei die Regelungseinrichtung dateneingangsseitig mit einer Anzahl von jeweils den einzelnen Turbinen zugeordneten und zur Erfassung des jeweils an den Wellenstrang abgegebenen Drehmomentes ausgelegten Drehmomentsensoren verbunden ist.

Die Leistung einer Kraftwerksturbine, etwa einer Dampfturbine oder einer Gasturbine, wird normalerweise durch die Leistung an der Generatorklemme bestimmt, d. h. aus der elektrischen Leistung am Generator wird auf die Leistung der Turbine rückgeschlossen. Sind mehrere Turbinen hintereinander auf einer gemeinsamen Welle angeordnet (Einwellenanordnung), etwa eine Gasturbine und eine Dampfturbine bei einer kombinierten Gas- und Dampfturbinenanlage, ist eine individuelle Bestimmung der Leistung der einzelnen Turbinen bzw. des jeweiligen Anteils an der Gesamtleistung mit dieser Methode nicht mehr möglich. Es können zwar die einzelnen Leistungsbeiträge aufgrund von Betriebsdaten, insbesondere Massenströme, Drücke und Temperaturen, überschlagsmäßig berechnet werden; diese Berechnungen sind aufgrund der Messtoleranzen der Betriebsmessung und der verwendeten approximativen Formeln jedoch mit einer hohen Unsicherheit behaftet. Eine genaue Aufteilung der Anlagenleistung auf die einzelnen Turbinen ist somit unbekannt.

Durch die Messung der elektrischen Leistung besteht weiterhin der Nachteil, dass Änderungen in der Drehzahl mitgemessen werden, da Rotationsenergie in elektromagnetische Felder umgewandelt wird. Die starken Schwankungen der elektrischen Leistung erschweren temporär die Nutzung dieses Signals für die Regelung der Gasturbine.

Zur Umgehung derartiger Schwierigkeiten ist es beispielsweise aus der internationalen Patentanmeldung WO 2005/078403 A2 bekannt, bei einer derartigen Einwellenanlage mittels zugeordneter Drehmoment- oder Torsionssensoren das von der jeweiligen Turbine an den Wellenstrang bzw. das jeweilige Wellensegment abgegebene oder übertragene Drehmoment zu ermitteln. Bei bekannter Generatorklemmenleistung kann dann, wie z. B. in der genannten Druckschrift beschrieben, durch einfache Verhältnisbildungen der individuelle Leistungsbeitrag der einzelnen Turbinen mit hoher Genauigkeit bestimmt werden. Für derartige Zwecke besonders geeignete Sensortypen und Messprinzipien sind bekannt, z. B. aus der genannten Druckschrift WO 2005/078403 A2 oder aus den Druckschriften US 4,637,264 und DE 199 32 965 A1.

Ein Nachteil der bislang realisierten Konzepte, die auf der Ermittlung der aktuellen Leistungswerte oder Leistungsanteile der einzelnen Turbinen bei Einwellenanlagen aufbauen, besteht darin, dass sie von ihrer grundsätzlichen Zielrichtung her üblicherweise spezifisch auf die Einstellung eines optimalen Betriebsverhaltens in einem stationären Betriebszustand - mit möglichst konstanter Nenndrehzahl - ausgerichtet sind. Dynamische Betriebszustände hingegen, z. B. bei Lastwechselvorgängen in Folge variierender Netzanforderungen oder beim Anfahrbetrieb einer derartigen Kraftwerksturbine, werden bei den bislang bekannten Steuerungs- bzw. Regelungskonzepten und bei der zugehörigen Mess- und Leittechnik nur unvollkommen berücksichtigt. Insbesondere ist eine auf den eingangs genannten Methoden aufbauende Optimierung des Anfahrverhaltens einer Gas- und Dampfturbinenanlage in Einwellenkonfiguration bislang noch nicht vorgesehen.

Der vorliegenden Erfindung liegt daher die Aufgabe zugrunde, das eingangs genannte Betriebsverfahren konsequent für eine optimierte Beherrschung von dynamischen Betriebszuständen bei Einwellenanlagen zu ertüchtigen und insbesondere für eine spezifische Unterstützung von Anfahrvorgängen - mit der Zielsetzung besonders kurzer Anfahrzeiten bei zugleich hoher betrieblicher Sicherheit - auszulegen und weiterzuentwickeln. Weiterhin soll eine zur Realisierung bzw. technischen Umsetzung dieses Verfahrens besonders geeignete Regelungseinrichtung angegeben werden.

In Bezug auf das Verfahren wird die Aufgabe erfindungsgemäß dadurch gelöst, dass während eines Lastwechselvorgangs, insbesondere beim Anfahren der Kraftwerksturbinenanlage, aus dem zeitlichen Verlauf der individuellen Leistungsbeiträge individuelle zeitliche Lastgradienten für die einzelnen Turbinen ermittelt und als Eingangsgrößen für eine individuelle Leistungsregelung zugrunde gelegt werden.

Die Erfindung geht von der Überlegung aus, dass eine Turbine einen Lastwechselvorgang, bei dem die Turbinenleistung von einem vergleichsweise geringeren Wert, beispielsweise Null beim Stillstand, auf einen vergleichsweise höheren Wert, beispielsweise die Nennbetriebsleistung, gesteigert werden soll, zum einen aus prinzipiellen physikalischen Gründen, zum anderen aber auch zur Vermeidung einer unzulässig hohen Materialbelastung oder -ermüdung und somit zur Vermeidung dauerhafter struktureller Beschädigungen nicht mit beliebiger Geschwindigkeit bzw. nicht innerhalb einer beliebig kurzen Zeitspanne durchlaufen kann. Vielmehr existiert für jede Turbine ein in der Regel vom Hersteller festgelegter zulässiger Maximalwert oder kritischer Wert für den so genannten Lastgradienten, der aus Gründen der betrieblichen Sicherheit nicht überschritten werden sollte, etwa durch eine allzu plötzliche Erhöhung des Brennstoffmassenstroms. Unter dem Begriff Lastgradient oder Leistungsgradient wird hier ganz allgemein eine Änderung der Turbinenleistung in einem Zeitintervall verstanden, oder in einem mathematisch präziserem Sinne die zeitliche Ableitung der Turbinenleistung. Schlagwortartig kann man bezogen auf Anfahrvorgänge auch von einem "Anfahrgradienten" sprechen. Die zulässigen Gradienten, d. h. die erlaubten Maximalwerte, sind in der Regel von Turbine zu Turbine unterschiedlich, insbesondere bei Turbinen verschiedenen Typs, wie etwa einer Dampfturbine einerseits und einer Gasturbine andererseits.

An dieser Stelle setzt die Erfindung an. Sie beruht auf dem Gedanken, dass bei einer Einwellenanlage mit mehreren hintereinander auf einer gemeinsamen Welle angeordneten Turbinen für eine besonders schnelle Bewältigung eines Anfahr- oder sonstigen Laststeigerungsvorgangs der Gesamtanlage jede einzelne Turbine in einem möglichst hohen und intensiven Maße an der Leistungssteigerung teilhaben sollte. Anstatt wie bislang von der konservativen Annahme auszugehen, dass unter Umständen eine einzelne der Turbinen die gesamte Leistungssteigerung alleine "fährt", während die anderen Turbinen lediglich mehr oder weniger passiv "mitlaufen", wodurch der maximal zulässige Lastgradient für eine einzelne Maschine den erreichbaren Gradienten für die Gesamtanlage festlegt und limitiert, sollte nunmehr gemäß dem vorliegenden Konzept beim schnellen Anfahren der Anlage oder auch bei einer Laststeigerung zur Frequenzstützung möglichst jede der den Generator antreibenden Turbinen mit einem möglichst hohen Lastgradienten betrieben werden. Mit anderen Worten: Bei Bedarf sollte es möglich sein, bei jeder einzelnen der Turbinen den individuell verschiedenen, maximal zulässigen Lastgradienten möglichst gut auszunutzen oder "auszuschöpfen".

Um eine derartige Betriebsweise grundsätzlich zu ermöglichen und zu unterstützen, ist es daher vorgesehen, unter Rückgriff auf das bereits vom stationären Betriebsfall bekannte und dort für das so genannte "Online Performance Tracking" eingesetzte Messkonzept der (vorzugsweise berührungslosen) Drehmoment- oder Torsionsmomentmessung an einem der jeweiligen Turbine zugeordneten Wellenabschnitt nunmehr nicht nur den jeweiligen Leistungsanteil an sich, sondern darüber hinaus auch den zugehörigen Leistungs- oder Lastgradienten der Einzelturbine zu erfassen und als Eingangsgröße für eine individuelle Leistungsregelung der einzelnen Turbinen zugrunde zu legen.

In einer Minimalausführung ist bei einer Anlage mit zwei Turbinen auf einer gemeinsamen Welle lediglich ein einziger Drehmoment- oder Torsionssensor erforderlich, über den der Leistungsbeitrag einer ersten Turbine messtechnisch erfasst wird, während der Leistungsbeitrag der anderen Turbine sich durch die Differenz aus der Generatorklemmenleistung zum so gemessenen Leistungsbeitrag der ersten Turbine berechnen lässt. Für besonders genaue und unverfälschte Ergebnisse ist aber vorzugsweise jeder der Turbinen ein eigener Drehmomentsensor zugeordnet (entsprechend auch bei mehr als zwei Turbinen).

Anstatt zuerst aus den messtechnisch erfassten Drehmomentwerten auf die jeweiligen Leistungsanteile zu schließen und anschließend aus dem zeitlichen Verlauf der Leistung den jeweiligen Leistungs- oder Lastgradienten - z. B. durch numerische Differenziation - zu ermitteln, kann es auch vorgesehen sein, direkt aus den aufgenommenen Drehmomentdaten den jeweiligen Lastgradienten zu berechnen.

Vorteilhafterweise wird während des Lastwechselvorganges die Leistungsregelung für jede der auf dem Wellenstrang der Einwellenanlage angeordneten Turbinen unter der Nebenbedingung durchgeführt, dass der ermittelte Lastgradient einen für diese Turbine vorgegebenen zulässigen Maximalwert im gesamten Verlauf des Lastwechselvorganges nicht überschreitet. Dieser kritische (Höchst-) Wert kann dabei zweckmäßigerweise für jede der Turbinen ein anhand empirischer Daten oder betrieblicher Erfahrungen festgelegter konstanter Wert sein. In einer komplexeren Variante des Verfahrens ist es aber auch vorstellbar, den Wert des zulässigen Lastgradienten für die jeweilige Maschine in Abhängigkeit von anderen Parametern oder aktuellen betrieblichen Daten, wie etwa der aktuellen Turbinenleistung, und somit in der Regel zeitlich veränderlich vorzugeben.

Besonders vorteilhaft ist es, wenn während eines Lastwechselvorgangs der Istwert des jeweiligen Lastgradienten als Regelgröße einem jeweils individuell vorgegebenen Sollwert nachgeführt wird. Dabei wird zweckmäßigerweise der jeweilige Sollwert während der gesamten Zeitdauer des Lastwechselvorgangs oder zumindest über einen wesentlichen Teil dieses Zeitraumes konstant gehalten. Insbesondere ist es für eine Realisierung besonders kurzer Anfahrtszeiten vorteilhaft, den jeweiligen Sollwert, gegebenenfalls unter Berücksichtigung eines wählbaren Sicherheitsabstandes, möglichst nahe zum jeweils zulässigen Maximalwert vorzugeben. Dadurch wird das Potential aller verfügbaren Turbinen gerade auch beim Anfahrvorgang auf ausgesprochen effektive Weise ausgenutzt, ohne die betriebliche Sicherheit zu gefährden. Sobald die gewünschte Gesamtleistung der Turbinenanlage erreicht ist, was z. B. über die Klemmenleistung am Generator detektiert werden kann, wird dann der jeweilige Sollwert für den Lastgradienten auf Null zurückgenommen und das Leistungsniveau konstant gehalten.

Als geeignete Stellgrößen für eine derartige gradientenbasierte oder -geführte Betriebsregelung kommen im Fall einer Gasturbine insbesondere der Brennstoffmassenstrom oder der durch den Anstellwinkel der Leitschaufeln regulierbare Luftmassenstrom in Betracht. Alternativ oder zusätzlich kann zur Leistungsregulierung auch eine geeignete Ansteuerung einer Wassereinspritzung in die Brennkammer bzw. in den Verdichter und/oder einer Ansaugkühlvorrichtung vorgesehen sein. Im Fall einer Dampfturbine sind geeignete Stellgrößen insbesondere der Massenstrom des zuströmenden Dampfes, die Dampftemperatur und/oder das Kondensatorvakuum.

In sensorischer / messtechnischer Hinsicht ist es vorteilhaft, wenn der Drehmomentbeitrag der jeweiligen Turbine mit Hilfe eines optischen Sensors, der die Torsion eines der jeweiligen Turbine zugeordneten Wellensegmentes erfasst, oder mit Hilfe eines magnetischen Sensors, der eine torsionsbedingte Änderung der magnetischen Permeabilität in einem der jeweiligen Turbine zugeordneten Wellensegment erfasst, auf berührungslose Weise ermittelt wird. Derartige Messstellen sind einfach zu installieren oder nachzurüsten, ohne dass irgendwelche Teile an der Welle selber installiert werden müssen.

Besonders vorteilhaft ist die Anwendung des geschilderten Regelungskonzeptes im Fall einer als Einwellenanlage ausgeführten kombinierten Gas- und Dampfturbinenanlage, bei der der zum Betrieb der Dampfturbine notwendige Dampf zweckmäßigerweise in einem der Gasturbine abgasseitig nachgeschalteten Abhitzedampfkessel erzeugt wird.

In Bezug auf die Regelungseinrichtung wird die oben genannte Aufgabe gelöst, indem die Regelungseinrichtung ein Datenaufbereitungsmodul umfasst, welches aus dem zeitlichen Verlauf der einzelnen Drehmomentbeiträge individuelle zeitliche Lastgradienten für die einzelnen Turbinen ermittelt, wobei ein datenseitig mit dem Datenaufbereitungsmodul verbundenes Regelglied auf die ermittelten Lastgradienten zugreift und diese bei der individuellen Leistungsregelung der einzelnen Turbinen während eines Lastwechselvorganges, insbesondere beim Anfahren der Turbinenanlage, verarbeitet.

Vorzugsweise weist die Regelungseinrichtung ein Überwachungsmodul auf, das eine Leistungsgradientendrosselung der jeweiligen Turbine einleitet, sobald sich der für diese Turbine ermittelte Lastgradient über einen wählbaren Sicherheitsabstand hinaus an den zugehörigen zulässigen Maximalwert annähert oder diesen überschreitet. Zweckmäßigerweise ist das Regelungsglied derart konfiguriert oder programmiert, dass der ermittelte aktuelle Wert des jeweiligen Lastgradienten während eines Lastwechselvorganges einem individuell vorgegebenen Sollwert nachgeführt wird.

Die mit der Erfindung erzielten Vorteile bestehen insbesondere darin, dass durch die genaue Kenntnis der individuellen Lastgradienten der Einzelturbinen bei einer Kraftwerksturbine in Einwellenkonfiguration und durch die geeignete Einbeziehung dieser Gradienten in die Turbinenregelung das Leistungspotential der Turbinen insbesondere beim Anfahren wesentlich besser als bislang ausgenutzt werden kann. Dadurch ergibt sich eine Reduzierung der Anfahrtszeit der Anlage und eine Verbesserung der Fähigkeit, Frequenzstützung zu fahren. Generell ist bei dem neuen Konzept die Regelbarkeit der Anlage bei Drehzahlschwankungen verbessert. Gerade bei den heutzutage vorliegenden Anforderungen in liberalisierten Strommärkten stellt die sich aus diesen Merkmalen ergebende erhöhte Betriebsflexibilität einen wesentlichen Vorteil dar. Zusätzlich führen schnellere Anfahrtszeiten zu einem reduzierten Schadstoffausstoß und liefern somit einen Beitrag zu einem umweltfreundlicheren Kraftwerk.

Ein Ausführungsbeispiel der Erfindung wird anhand einer Zeichnung näher erläutert. Darin zeigen:

FIG 1          eine Kraftwerksturbinenanlage mit einer Gasturbine, einem Generator und einer Dampfturbine in Einwellenanordnung, und

FIG 2 bis FIG 6          verschiedene Diagramme, in denen der zeitliche Verlauf von der Anfahrregelung der Kraftwerksturbinenanlage gemäß FIG 1 zugrunde gelegten Betriebsgrößen dargestellt ist.

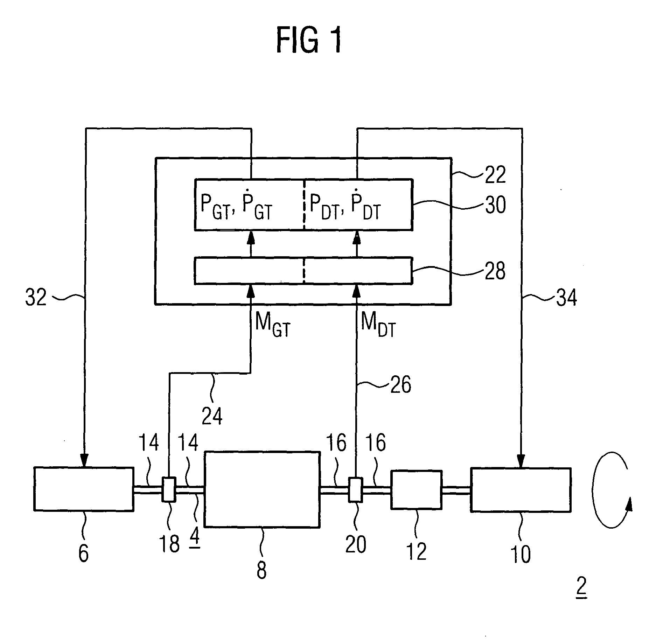

Bei der in FIG 1 schematisch dargestellten Kraftwerksturbinenanlage 2 handelt es sich um eine kombinierte Gas- und Dampfturbinenanlage in so genannter Einwellenanordnung. Auf dem gemeinsamen Wellenstrang 4 sind linear hintereinander eine Gasturbine 6, ein Generator 8 und eine Dampfturbine 10 angeordnet, wobei bei der in FIG 1 dargestellten Konfiguration der Generator 8 zwischen der Gasturbine 6 und der Dampfturbine 10 liegt. Alternativ könnte aber auch beispielsweise die Gasturbine 6 zwischen der Dampfturbine 10 und dem Generator 8 angeordnet sein, oder auch die Dampfturbine 10 zwischen der Gasturbine 6 und dem Generator 8. Mit Hilfe einer (optionalen) Kupplung 12 kann die Dampfturbine 10 bedarfsweise vom Generator 8 abgekoppelt werden, so dass dieser dann alleine durch die Gasturbine 6 angetrieben wird.

Die Kraftwerksturbinenanlage 2 ist spezifisch für ein optimiertes Anfahrverhalten mit besonders kurzer Anfahrzeit bei gleichzeitig hoher betrieblicher Sicherheit ausgelegt. Zu diesem Zweck sind an den Wellenteilen 14 bzw. 16 zwischen dem Generator 8 und der Gasturbine 6 sowie zwischen dem Generator 8 und der Dampfturbine 10 Messvorrichtungen 18 bzw. 20 in Form optischer und/oder magnetischer Sensoren zur jeweiligen Bestimmung der Torsion und/oder von mechanischen Spannungen und damit von Drehmomenten $M_{GT}$ bzw. $M_{DT}$, die der Welle 4 durch die jeweilige Turbine 6 bzw. 10 aufgeprägt werden, installiert. Die Sensoren können beispielsweise wie in der Druckschrift WO 2005/078403 A2 beschrieben aufgebaut sein. Bei bekannter, messtechnisch einfach erfassbarer Generatorklemmenleistung $P_{Gen}$ können dann, wie in dieser Druckschrift ebenfalls detailliert erläutert ist, anhand der gemessenen Drehmomente $M_{GT}$ und $M_{DT}$ auf den Wellenteilen 14 bzw. 16 die Leistung $P_{GT}$ der Gasturbine 6 und die Leistung $P_{DT}$ der Dampfturbine 10 bzw. deren jeweiliger Anteil an der Gesamtleistung $P_{Gen} = P_{GT} + P_{DT}$ durch einfache Berechnungsformeln zuverlässig ermittelt werden.

Darüber hinaus trägt das für die Kraftwerksturbinenanlage 2 zum Einsatz kommende Regelungskonzept der Erkenntnis Rechnung, dass Anfahrvorgänge in besonders geeigneter Weise mit Hilfe der jeweiligen zeitlichen Lastgra-

dienten

$$\dot{P}_{GT} = \left.\frac{\Delta P_{GT}}{\Delta t}\right|_{\Delta t \to 0} \qquad \text{und} \qquad \dot{P}_{DT} = \left.\frac{\Delta P_{DT}}{\Delta t}\right|_{\Delta t \to 0}$$

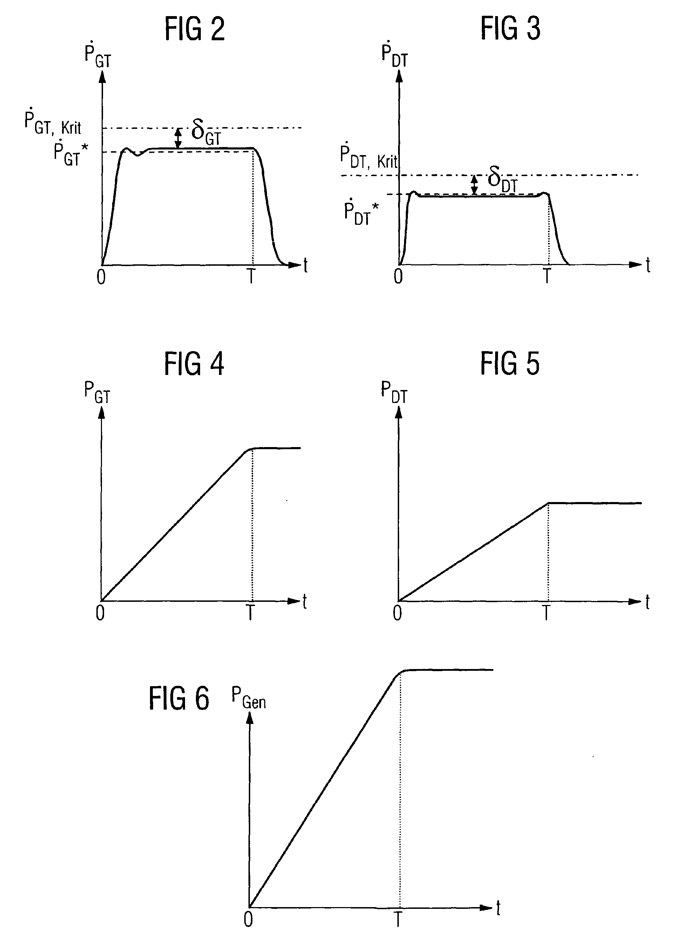

überwacht und geregelt werden können, wobei t die Zeit bezeichnet. Bei dem durch die Diagramme in FIG 2 bis FIG 6 veranschaulichten Regelungskonzept für den (hier bei t = 0 beginnenden) Anfahrvorgang wird unterstellt, dass für jede der beiden Turbinen 6 und 10 ein kritischer Wert für den Lastgradienten existiert, hier mit $\dot{P}_{GT,krit}$ und $\dot{P}_{DT,krit}$ bezeichnet, der für die jeweilige Maschine im Interesse der Betriebssicherheit und/oder einer langen Lebens- bzw. Betriebsdauer während des gesamten Anfahrvorganges nicht überschritten werden sollte. Dabei sei - in guter Annäherung an die realen Gegebenheiten - vereinfachend angenommen, dass diese kritischen Werte von anderen Betriebs- oder Zustandsgrößen der jeweiligen Turbine 6 bzw. 10 unabhängig und somit zeitlich konstant sind. In der Regel sind sie voneinander verschieden.

Wie in den beiden Diagrammen in FIG 2 und FIG 3 dargestellt ist, wird während des Anfahrens der Einwellenanlage 2 für jede der beiden Turbinen 6 bzw. 10 ein zeitlich konstanter Sollwert $\dot{P}^*_{GT}$ bzw. $\dot{P}^*_{DT}$ (gestrichelte Linie) des jeweiligen Lastgradienten vorgegeben, dem - für jede der beiden Turbinen 6 bzw. 10 individuell und unabhängig voneinander - der aktuelle, messtechnisch erfasste Istwert $\dot{P}_{GT(t)}$ bzw. $\dot{P}_{DT(t)}$ (durchgezogene Linie) in der Art einer Regelgröße nachgeführt wird. Der Sollwert $\dot{P}^*_{GT}$ bzw. $\dot{P}^*_{DT}$ ist jeweils so eingestellt, dass er knapp unterhalb des maximal zulässigen, kritischen Wertes $\dot{P}_{GT,krit}$ bzw. $\dot{P}_{DT,krit}$ liegt, wobei durch einen vorgebbaren Sicherheitsabstand $\delta_{GT}$ bzw. $\delta_{DT}$ sichergestellt werden kann, dass der jeweilige kritische Wert auch beim Auftreten von Regelungsabweichungen, die sich in Schwankungen des aktuellen Wertes des Lastgradienten um den Sollwert manifestieren, nicht überschritten wird.

Der aus dieser gradientengeführten Anfahrregelung resultierende zeitliche Verlauf der jeweiligen Turbinenleistung $P_{GT}(t)$ bzw. $P_{DT}(t)$ ist in den beiden Diagrammen gemäß FIG 4 und FIG 5 dargestellt. Der Kurvenverlauf ergibt sich dabei jeweils durch zeitliche Integration der in den beiden Diagrammen gemäß FIG 2 und FIG 3 dargestellten Gradientenkurven. Der zeitliche Verlauf der Gesamtturbinenleistung $P_{Gen} = P_{GT} + P_{DT}$ ist in dem Diagramm gemäß FIG 6 dargestellt. Sobald die gewünschte Gesamtleistung $P_0$ erreicht ist, was hier zum Zeitpunkt t = T geschehen ist, wird der Sollwert für den jeweiligen Lastgradienten auf Null zurückgenommen. In dieser sich an den Anfahrvorgang anschließenden Periode konstanter Turbinenleistung kann gegebenenfalls von der gradientengeführten Regelung auf eine vom jeweiligen (Leistungs-) Wert selbst geführte Regelung umgeschaltet werden.

Zur Realisierung des beschriebenen Regelungskonzeptes weist die Kraftwerksturbinenanlage 2 eine in FIG 1 schematisch dargestellte Regelungseinrichtung 22 auf, die dateneingangsseitig über Signalleitungen 24, 26 mit den Drehmomentsensoren 18, 20 verbunden ist. In einem Datenaufbereitungsmodul 28 der Regelungseinrichtung 22 werden aus den erfassten Drehmomentwerten $M_{GT}$ und $M_{DT}$ die jeweilige Turbinenleistung $P_{GT}$ und $P_{DT}$ sowie die zugehörigen zeitlichen Gradienten $\dot{P}_{GT}$ und $\dot{P}_{DT}$ ermittelt und anschließend dem eigentlichen Regelglied 30 für die (Anfahr-) Regelung als Eingangsgrößen zur Verfügung gestellt. In dem Regelglied 30 sind die oben bereits erläuterten Regelungsvorgaben hinterlegt. Über ein hier nicht näher dargestelltes Bedienterminal können dabei gegebenenfalls relevante Parameter (z. B. die kritischen Werte) eingestellt werden. Über die Steuersignalleitungen 32, 34 werden die vom Regelglied 30 ausgegebenen Steuersignale an zur Steuerung relevanter Stellgrößen (z. B. Brennstoffmassenstrom etc.) geeignete Aktoren übermittelt und damit der Regelkreis geschlossen.

Wie durch die gestrichelte Linie innerhalb des das Regelglied 30 repräsentierenden Symbols angedeutet ist, erfolgt die Regelung idealerweise für jede der beiden Turbinen individuell und unabhängig voneinander, wobei die Werte von $\dot{P}_{GT}$ und gegebenenfalls $P_{GT}$ nur in die Regelung für die Gasturbine 6 eingehen, die Werte von $\dot{P}_{DT}$ und $P_{DT}$ hingegen nur in die Regelung der Dampfturbine 10. Es sind aber prinzipiell auch komplexere Szenarien und Regelungsalgorithmen zur Betriebsoptimierung vorstellbar, die auf der Kenntnis der Werte von $\dot{P}_{GT}$ und $\dot{P}_{DT}$ aufbauen. Wie bereits erwähnt, können für den Normalbetrieb bei konstanter Gesamtleistung und/oder konstanter Drehzahl auch alternative Regelungskonzepte vorgesehen sein. Dementsprechend kann die Regelungseinrichtung gegebenenfalls modular aufgebaut sein und unterschiedliche Module, insbesondere in Form von Softwaremodulen, für die Regelung von Anfahr- bzw. Lastwechselvorgängen einerseits und für den Normalbetrieb andererseits aufweisen.

**Patentansprüche**

**1.** Verfahren zum Betreiben einer Kraftwerksturbinenanlage (2) mit mindestens zwei hintereinander auf einem gemeinsamen Wellenstrang (4) angeordneten, einen Generator (8) antreibenden Turbinen (6, 10), bei dem mittels zugeordneter Drehmomentsensoren das von der jeweiligen Turbine (6, 10) an den Wellenstrang (4) abgegebene Drehmoment ($M_{GT}$, $M_{DT}$) ermittelt und in einen individuellen Leistungsbeitrag ($P_{GT}$, $P_{DT}$) der jeweiligen Turbine (6, 10) umgerechnet wird,

**dadurch gekennzeichnet, dass**

während eines Lastwechselvorgangs, insbesondere beim Anfahren der Kraftwerksturbinenanlage (2), aus dem zeitlichen Verlauf der individuellen Leistungsbeiträge ($P_{GT}$, $P_{DT}$) individuelle zeitliche Lastgradienten ($\dot{P}_{GT}$, $\dot{P}_{DT}$) für die einzelnen Turbinen (6, 10) ermittelt und als Eingangsgrößen für eine individuelle Leistungsregelung der einzelnen Turbinen (6, 10) zugrunde gelegt werden.

2. Verfahren nach Anspruch 1,
**dadurch gekennzeichnet, dass**
die Leistungsregelung unter der Nebenbedingung durchgeführt wird, dass die für die einzelnen Turbinen (6, 10) ermittelten Lastgradienten ($\dot{P}_{GT}$, $\dot{P}_{DT}$) einen jeweils individuell vorgegeben zulässigen Maximalwert ($\dot{P}_{GT,krit}$, $\dot{P}_{DT,krit}$) im gesamten Verlauf des Lastwechselvorganges nicht überschreiten.

3. Verfahren nach Anspruch 1 oder 2,
**dadurch gekennzeichnet, dass**
während eines Lastwechselvorgangs der Istwert des jeweiligen Lastgradienten ($\dot{P}_{GT}$, $\dot{P}_{DT}$) in der Art einer Regelgröße einem jeweils individuell vorgegebenen Sollwert ($\dot{P}^{*}_{GT}$, $\dot{P}^{*}_{DT}$) nachgeführt wird.

4. Verfahren nach Anspruch 3,
**dadurch gekennzeichnet, dass**
der jeweilige Sollwert ($\dot{P}^{*}_{GT}$, $\dot{P}^{*}_{DT}$) während der gesamten Zeitdauer des Lastwechselvorgangs oder zumindest über einen wesentlichen Teil dieses Zeitraumes konstant gehalten wird.

5. Verfahren nach Anspruch 4,
**dadurch gekennzeichnet, dass**
der jeweilige Sollwert ($\dot{P}^{*}_{GT}$, $\dot{P}^{*}_{DT}$) unter Berücksichtigung eines wählbaren Sicherheitsabstandes ($\delta_{GT}$, $\delta_{DT}$) möglichst nahe zum jeweils zulässigen Maximalwert ($\dot{P}_{GT,krit}$, $\dot{P}_{DT,krit}$) vorgegeben wird.

6. Verfahren nach einem der Ansprüche 1 bis 5,
**dadurch gekennzeichnet, dass**
als Stellgröße(n) im Falle einer Gasturbine (6) der Brennstoffmassenstrom und/oder den Anstellwinkel der Turbinenleitschaufeln und im Falle einer Dampfturbine (10) der Massenstrom und/oder die Temperatur des zuströmenden Dampfes und/oder das Kondensatorvakuum eingestellt werden.

7. Verfahren nach einem der Ansprüche 1 bis 6,
**dadurch gekennzeichnet, dass**
der Drehmomentbeitrag ($M_{GT}$, $M_{DT}$) der jeweiligen Turbine (6, 10) mit Hilfe eines optischen Sensors, der die Torsion eines der jeweiligen Turbine (6, 10) zugeordneten Wellensegments (14, 16) erfasst, oder mit Hilfe eines magnetischen Sensors, der eine torsionsbedingte Änderung der magnetischen Permeabilität in einem der jeweiligen Turbine (6, 10) zugeordneten Wellensegment (14, 16) erfasst, auf berührungslose Weise ermittelt wird.

8. Verfahren nach einem der Ansprüche 1 bis 7,
**dadurch gekennzeichnet, dass**
die Kraftwerksturbinenanlage (2) als Turbinen (6, 10) eine Dampfturbine (10), insbesondere mit einer Mehrzahl von Druckstufen, und eine Gasturbine (6) umfasst.

9. Regelungseinrichtung (22) für eine Kraftwerksturbinenanlage (2) mit mindestens zwei hintereinander auf einem gemeinsamen Wellenstrang (4) angeordneten, einen Generator (8) antreibenden Turbinen (6, 10), die dateneingangsseitig mit einer Mehrzahl von jeweils den einzelnen Turbinen (6, 10) zugeordneten und zur Erfassung des jeweils an den Wellenstrang (4) abgegebenen Drehmomentes ($M_{GT}$, $M_{DT}$) ausgelegten Drehmomentsensoren (18, 20) verbunden ist, wobei die Regelungseinrichtung (22) ein Datenaufbereitungsmodul (28) umfasst, welches aus dem zeitlichen Verlauf der einzelnen Drehmomentbeiträge ($M_{GT}$, $M_{DT}$) individuelle zeitliche Lastgradienten ($\dot{P}_{GT}$, $\dot{P}_{DT}$) für die Turbinen (6, 10) ermittelt, und wobei ein datenseitig mit dem Datenaufbereitungsmodul (28) verbundenes Regelglied (30) auf die ermittelten Lastgradienten ($\dot{P}_{GT}$, $\dot{P}_{DT}$) zugreift und diese bei der individuellen Leistungsregelung der einzelnen Turbinen (6, 10) während eines Lastwechselvorganges, insbesondere beim Anfahren der Kraftwerksturbinenanlage (2), verarbeitet.

10. Regelungseinrichtung (22) nach Anspruch 9 mit einem Überwachungsmodul, das eine Leistungsdrosselung der jeweiligen Turbine (6, 10) einleitet, sobald sich der für diese Turbine (6, 10) ermittelte Lastgradient ($\dot{P}_{GT}$, $\dot{P}_{DT}$) über einen wählbaren Sicherheitsabstand ($\delta_{GT}$, $\delta_{DT}$) hinaus an den zugehörigen zulässigen Maximalwert ($P_{GT,krit}$, $P_{DT,krit}$) annähert oder diesen überschreitet.

11. Regelungseinrichtung (22) nach Anspruch 9 oder 10, deren Regelglied derart konfiguriert (30) ist, dass der ermittelte aktuelle Wert des jeweiligen Lastgradienten ($\dot{P}_{GT}$, $\dot{P}_{DT}$) während eines Lastwechselvorganges einem individuell vorgegebenen Sollwert ($\dot{P}^*_{GT}$, $\dot{P}^*_{DT}$) nachgeführt wird.

12. Kraftwerksturbinenanlage (2) mit einer Gasturbine (6), einer Dampfturbine (10) und mit einem Generator (8) in Einwellenanordnung und mit einer Regelungseinrichtung (22) nach einem der Ansprüche 9 bis 11.

# FIG 1

$P_{GT}, \dot{P}_{GT}$     $P_{DT}, \dot{P}_{DT}$

$M_{GT}$     $M_{DT}$

## FIG 2

$$\dot{P}_{GT}$$

$\dot{P}_{GT, Krit}$

$\delta_{GT}$

$\dot{P}_{GT}*$

$0$    $T$    $t$

## FIG 3

$$\dot{P}_{DT}$$

$\dot{P}_{DT, Krit}$

$\delta_{DT}$

$\dot{P}_{DT}*$

$0$    $T$    $t$

## FIG 4

$$P_{GT}$$

$0$    $T$    $t$

## FIG 5

$$P_{DT}$$

$0$    $T$    $t$

## FIG 6

$$P_{Gen}$$

$0$    $T$    $t$

**Europäisches Patentamt**

**EUROPÄISCHER RECHERCHENBERICHT**

Nummer der Anmeldung

EP 07 01 5828

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | DE 198 29 178 A1 (ASEA BROWN BOVERI [CH]) 5. Januar 2000 (2000-01-05) * Spalte 1, Zeilen 53-63 * * Spalte 2, Zeile 65 - Spalte 3, Zeile 33 * * Spalte 4, Zeilen 31-55 * * Spalte 5, Zeile 19 - Spalte 6, Zeile 20 * * Abbildungen 1,2 * ----- | 1-6,8-12 | INV. F01D13/00 F01D19/00 F01D17/02 F01K23/10 |
| Y | EP 1 710 400 A (SIEMENS AG [DE]) 11. Oktober 2006 (2006-10-11) * Spalte 1, Zeile 38 - Spalte 3, Zeile 25 * * Spalte 3, Zeile 46 - Spalte 4, Zeile 44 * * Abbildung 1 * ----- | 1-12 | |
| Y,D | WO 2005/078403 A (SIEMENS AG [DE]; BRUMMEL HANS-GERD [US]; HEINDEL HANS-PETER [DE]; KRAE) 25. August 2005 (2005-08-25) * Zusammenfassung * * Seite 9, Zeile 19 - Seite 11, Zeile 9 * * Abbildungen 1-8 * ----- | 1,7 | RECHERCHIERTE SACHGEBIETE (IPC) F01D F02C F01K |
| A | US 5 042 246 A (MOORE JAMES H [US] ET AL) 27. August 1991 (1991-08-27) * Zusammenfassung * * Spalte 6, Zeile 35 - Spalte 8, Zeile 11 * * Abbildungen 1-4 * ----- | 1-12 | |

Der vorliegende Recherchenbericht wurde für alle Patentansprüche erstellt

| Recherchenort | Abschlußdatum der Recherche | Prüfer |
|---|---|---|
| Den Haag | 17. März 2008 | Gebker, Ulrich |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
......................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 07 01 5828

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-03-2008

| Im Recherchenbericht angeführtes Patentdokument | Datum der Veröffentlichung | Mitglied(er) der Patentfamilie | Datum der Veröffentlichung |
|---|---|---|---|
| DE 19829178 A1 | 05-01-2000 | KEINE | |
| EP 1710400 A | 11-10-2006 | WO 2006106075 A2<br>KR 20070120172 A | 12-10-2006<br>21-12-2007 |
| WO 2005078403 A | 25-08-2005 | DE 102005002966 A1 | 08-09-2005 |
| US 5042246 A | 27-08-1991 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005078403 A2
- US 4637264 A, Druckschriften

- DE 19932965 A1